(19) **Europäisches Patentamt**
**European Patent Office**
**Office européen des brevets**

(11) **EP 4 645 785 A1**

(12) **EUROPEAN PATENT APPLICATION**
published in accordance with Art. 153(4) EPC

(43) Date of publication:
**05.11.2025 Bulletin 2025/45**

(21) Application number: **24752672.6**

(22) Date of filing: **17.01.2024**

(51) International Patent Classification (IPC):
***H04L 27/26*** *(2006.01)*

(52) Cooperative Patent Classification (CPC):
**H04B 1/69; H04L 27/26**

(86) International application number:
**PCT/CN2024/072769**

(87) International publication number:
**WO 2024/164815 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023 CN 202310145236**

(71) Applicant: **Huawei Technologies Co., Ltd.
Shenzhen, Guangdong 518129 (CN)**

(72) Inventors:
• **WANG, Zhonglong
Shenzhen, Guangdong 518129 (CN)**

• **XIE, Xinqian
Shenzhen, Guangdong 518129 (CN)**
• **SHAO, Jiafeng
Shenzhen, Guangdong 518129 (CN)**
• **YE, Wei
Shenzhen, Guangdong 518129 (CN)**
• **LI, Hantao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SIGNAL TRANSMISSION METHOD AND RELATED APPARATUS**

(57) This application provides a signal transmission method and a related apparatus, to resolve a problem of a large ranging error for an OFDM signal generated based on a ZC sequence. The method includes: A first device generates a first signal based on the ZC sequence, where a root value of the ZC sequence is an element in a first set, a value of a multiplicative inverse of any element in the first set modulo N is an integer greater than n and less than N-n, N is an integer greater than n, N is a length of the ZC sequence, and n is an integer greater than 0 and less than N/2. The first device sends the first signal. Correspondingly, the first device or a second device receives an echo signal of the first signal.

400

FIG. 4

**Description**

This application claims priority to Chinese Patent Application No. 202310145236.3, filed with the China National Intellectual Property Administration on February 10, 2023 and entitled "SIGNAL TRANSMISSION METHOD AND RELATED APPARATUS", which is incorporated herein by reference in its entirety.

**TECHNICAL FIELD**

This application relates to the communication field, and in particular, to a signal transmission method and a related apparatus.

**BACKGROUND**

Integrated sensing and communication aims to integrate two functions of wireless communication and sensing into a same system, and implement, by using a propagation characteristic of a radio signal, sensing functions such as positioning, detection, imaging, and identification of a target. For example, a network device performs sensing by sending a sensing signal and simultaneously receiving an echo signal obtained by reflecting the sensing signal by a target in an environment. For example, a distance from the target is sensed based on a delay of the echo signal relative to the sent sensing signal, and a moving speed of the target is sensed based on a Doppler shift of the echo signal relative to the sent sensing signal. The sensing signal may be an orthogonal frequency division multiplexing (orthogonal frequency division multiplexing, OFDM) signal obtained by modulating a particular sequence on a subcarrier, and the particular sequence may be a Zadoff-Chu (Zadoff-Chu, ZC) sequence. When sensing is performed by using an OFDM signal generated based on the ZC sequence, sensing performance is different for OFDM signals generated based on different ZC sequences. Therefore, when sensing is performed by using a sensing signal generated based on a ZC sequence, how to select a ZC sequence is an urgent problem to be resolved.

**SUMMARY**

This application provides a signal transmission method and a related apparatus, to resolve a problem that a ranging error is large when sensing is performed by using an OFDM signal generated based on a ZC sequence.

According to a first aspect, a signal transmission method is provided. The method may be applied to a first device. For example, the method may be performed by a network device, or may be performed by a component (for example, a chip or a chip system) configured in the network device, or may be implemented by a logical module or software that can implement all or some functions of the network device. This is not limited in this application.

For example, the method includes: generating a first signal based on a ZC sequence, where a root value of the ZC sequence is an element in a first set, a multiplicative inverse of any element in the first set modulo N is an integer greater than n and less than N-n, N is an integer greater than n, N is a length of the ZC sequence, and n is an integer greater than 0 and less than N/2; and sending the first signal.

That the first device generates the first signal based on the ZC sequence includes: The first device respectively maps N elements in the ZC sequence to subcarriers of an OFDM signal, and sequentially performs inverse fast Fourier transform (inverse fast Fourier transform, IFFT) and parallel-to-serial conversion to obtain the OFDM signal; and adds a cyclic prefix to the OFDM signal, and obtains a radio frequency signal by using a radio frequency front end (radio frequency front end, RFEE) including a power amplifier (power amplifier, PA), where the radio frequency signal is the first signal.

It should be understood that the root value of the ZC sequence whose length is N may be any integer from 1 to N-1, and a multiplicative inverse of any root value modulo N is also an integer from 1 to N-1. When a value of the multiplicative inverse of the root value modulo N is greater than 0 and less than N/2, a chirp rate (chirp rate) of a signal obtained based on the ZC sequence increases as the multiplicative inverse of the root value modulo N of the ZC sequence increases, and a larger chirp rate of the signal indicates a smaller ranging error for the signal. When a value of the multiplicative inverse of the root value modulo N is greater than N/2 and less than N, a chirp rate of a signal obtained based on the ZC sequence decreases as the multiplicative inverse of the root value modulo N increases, and a smaller chirp rate of the signal indicates a larger ranging error for the signal.

The multiplicative inverse of any element in the first set modulo N in this application is an integer greater than n and less than N-n, a chirp rate of a first signal obtained based on a ZC sequence generated based on any element in the first set is greater than a chirp rate of a signal obtained based on a ZC sequence generated based on any element in a second set, and a multiplicative inverse of any element in the second set modulo N is an integer greater than 0 and less than or equal to n, or an integer greater than or equal to N-n and less than N. Therefore, a ranging error for the first signal obtained by the first device based on the ZC sequence generated based on the element in the first set is less than a ranging error for the signal obtained based on the ZC sequence generated based on the element in the second set.

With reference to the first aspect, in some implementations of the first aspect, the method further includes: receiving an echo signal of the first signal.

With reference to the first aspect, in some implementations of the first aspect, the method further includes: sending first information to a second device, where the first information includes the root value and the length of the ZC sequence, and/or information about a time domain resource and/or a frequency domain resource occupied by the first signal.

It should be understood that when receiving the echo signal of the first signal, the first device may not need to send the first information to the second device.

According to a second aspect, a signal transmission method is provided. The method may be applied to a second device. For example, the method may be performed by a network device or a terminal, or may be performed by a component (for example, a chip or a chip system) configured in the network device or the terminal, or may be implemented by a logical module or software that can implement all or some functions of the network device or the terminal. This is not limited in this application.

For example, the method includes: receiving an echo signal of a first signal, where the first signal is generated based on a ZC sequence, a root value of the ZC sequence is an element in a first set, and a value of a multiplicative inverse of any element in the first set modulo N is an integer greater than n and less than N-n, N is an integer greater than n, N is a length of the ZC sequence, and n is an integer greater than 0 and less than N/2.

The multiplicative inverse of any element in the first set modulo N in this application is an integer greater than n and less than N-n, a chirp rate of a first signal obtained by a first device based on a ZC sequence generated based on any element in the first set is greater than a chirp rate of a signal obtained based on a ZC sequence generated based on any element in a second set, and a multiplicative inverse of any element in the second set modulo N is an integer greater than 0 and less than or equal to n, or an integer greater than or equal to N-n and less than N. Therefore, when the second device performs ranging on a target based on the received echo signal of the first signal, an obtained ranging error is small.

The echo signal is a signal generated by reflecting the first signal by a target in an environment.

For beneficial effects of the second aspect, refer to the descriptions in the first aspect. Details are not described herein again.

With reference to the second aspect, in some implementations of the second aspect, the method further includes: receiving first information from a first device, where the first information includes the root value and the length of the ZC sequence, and/or information about a time domain resource and/or a frequency domain resource occupied by the first signal.

With reference to the first aspect and the second aspect, in some implementations of the first aspect and the second aspect, n is an integer greater than or equal to 3 and less than or equal to 15.

With reference to the first aspect and the second aspect, in some implementations of the first aspect and the second aspect, a quantity of resource blocks (resource blocks, RBs) occupied by the first signal is 264, N is 1583, and elements in the first set include 132, 144, 113, 487, 1484, 66, 1539, 88, 72, 838, 48, 766, 1170, 554, 1372, 33, 1035, 36, 18, 190, 1451, 1439, 1470, 1096, 99, 1517, 44, 1495, 1511, 745, 1535, 817, 413, 1029, 211, 1550, 548, 1547, 1565, or 1393.

With reference to the first aspect and the second aspect, in some implementations of the first aspect and the second aspect, a quantity of RBs occupied by the first signal is 132, N is 787, and elements in the first set include 164, 644, 322, 105, 281, 246, 190, 534, 121, 459, 712, 308, 162, 204, 324, 341, 306, 454, 161, 118, 623, 143, 465, 682, 506, 541, 597, 253, 666, 328, 75, 479, 625, 583, 463, 446, 481, 333, 626, or 669.

With reference to the first aspect and the second aspect, in some implementations of the first aspect and the second aspect, a quantity of RBs occupied by the first signal is 66, N=389, and elements in the first set include 30, 26, 13, 183, 106, 5, 250, 15, 41, 73, 10, 81, 127, 365, 37, 289, 54, 203, 64, 162, 359, 363, 376, 206, 283, 384, 139, 374, 348, 316, 379, 308, 262, 24, 352, 100, 335, 186, 325, or 227.

With reference to the first aspect and the second aspect, in some implementations of the first aspect and the second aspect, a quantity of RBs occupied by the first signal is 32, N=191, and elements in the first set include 175, 8, 10, 140, 45, 186, 179, 49, 150, 44, 92, 91, 6, 139, 31, 50, 105, 53, 4, 84, 16, 183, 181, 51, 146, 5, 12, 142, 41, 147, 99, 100, 185, 52, 160, 141, 86, 138, 187, or 107.

A first signal obtained based on a ZC sequence generated based on the element included in the first set that corresponds to N being 1583, N being 787, N being 389, or N being 191 has a low PAPR and a large chirp rate. Therefore, when sensing is performed by using the first signal obtained based on the ZC sequence generated based on the element in the first set, obtained ranging precision is high.

The first set in this application may include one or more elements. When n has different values, the first set may include a same element.

With reference to the first aspect and the second aspect, in some implementations of the first aspect and the second aspect, the first signal is used for sensing, or the first signal is used for sensing and channel measurement, or the first signal is used for sensing and channel estimation, or the first signal is used for sensing and downlink data demodulation.

With reference to the first aspect and the second aspect, in some implementations of the first aspect and the second aspect, the length of the ZC sequence is a prime number, the ZC sequence is mapped to N subcarriers, and the N subcarriers are distributed at equal intervals in frequency domain.

With reference to the first aspect and the second aspect, in some implementations of the first aspect and the second aspect, the element included in the first set is determined based on a chirp rate and/or a peak-to-average power ratio (peak-to-average power ratio, PAPR).

With reference to the first aspect and the second aspect, in some implementations of the first aspect and the second aspect, a chirp rate of an orthogonal frequency division multiplexing OFDM signal obtained based on a ZC sequence generated based on any element in the first set is greater than a chirp rate of an OFDM signal obtained based on a ZC sequence generated based on any element in a second set, and a multiplicative inverse of any element in the second set modulo N is an integer greater than 0 and less than or equal to n, or an integer greater than or equal to N-n and less than N.

With reference to the first aspect and the second aspect, in some implementations of the first aspect and the second aspect, a PAPR of the OFDM signal obtained based on the ZC sequence generated based on any element in the first set is less than a PAPR of the OFDM signal obtained based on the ZC sequence generated based on any element in the second set, and the multiplicative inverse of any element in the second set modulo N is an integer greater than 0 and less than or equal to n, or an integer greater than or equal to N-n and less than N.

According to a third aspect, a signal transmission method is provided. The method may be applied to a first device. For example, the method may be performed by a network device, or may be performed by a component (for example, a chip or a chip system) configured in the network device, or may be implemented by a logical module or software that can implement all or some functions of the network device. This is not limited in this application.

For example, a first signal is generated based on a ZC sequence, where a root value of the ZC sequence is an element in a third set, a value of any element in the third set is an integer greater than m and less than N-m, N is an integer greater than m, N is a length of the ZC sequence, and m is an integer greater than 0 and less than N/2; and the first signal is sent.

That the first device generates the first signal based on the ZC sequence includes: The first device performs discrete Fourier transform on N elements in the ZC sequence to obtain a frequency domain sequence of the ZC sequence; respectively maps the N elements in the frequency domain sequence of the ZC sequence to subcarriers of an OFDM signal, and sequentially performs IFFT and parallel-to-serial conversion to obtain the OFDM signal; and adds a cyclic prefix to the OFDM signal, and obtains a radio frequency signal by using an RFEE including a PA, where the radio frequency signal is the first signal.

It should be noted that the root value of the ZC sequence whose length is N may be any integer from 1 to N-1. In other words, the ZC sequence whose length is N corresponds to N-1 root values. In addition, when a value of the root value is greater than 0 and less than N/2, a chirp rate of the signal generated based on the ZC sequence increases as the root value increases, and a larger chirp rate of the signal indicates a smaller ranging error for the signal. When a value of the root value is greater than N/2 and less than N, a chirp rate of the first signal generated based on the ZC sequence decreases as the root value increases, and a smaller chirp rate of the signal indicates a larger ranging error for the signal.

Any element in the third set in this application is an integer greater than m and less than N-m, a chirp rate of a first signal obtained based on a ZC sequence generated based on any element in the third set is greater than a chirp rate of a signal obtained based on a ZC sequence generated based on any element in a fourth set, and any element in the fourth set is an integer greater than 0 and less than or equal to m, or an integer greater than or equal to N-m and less than N. Therefore, a ranging error for the first signal generated by the first device based on the ZC sequence generated based on the element in the third set is smaller than a ranging error for the signal obtained based on the ZC sequence generated based on the element in the fourth set.

With reference to the third aspect, in some implementations of the third aspect, the method further includes: receiving an echo signal of the first signal.

With reference to the third aspect, in some implementations of the third aspect, the method further includes: sending first information to a second device, where the first information includes the root value and the length of the ZC sequence, and/or information about a time domain resource and/or a frequency domain resource occupied by the first signal.

It should be understood that when receiving the echo signal of the first signal, the first device may not need to send the first information to the second device.

According to a fourth aspect, a signal transmission method is provided. The method may be applied to a second device. For example, the method may be performed by a network device or a terminal, or may be performed by a component (for example, a chip or a chip system) configured in the network device or the terminal, or may be implemented by a logical module or software that can implement all or some functions of the network device or the terminal. This is not limited in this application.

For example, the method includes: receiving an echo signal of a first signal, where the first signal is generated based on a ZC sequence, a root value of the ZC sequence is an element in a third set, a value of any element in the third set is an integer greater than m and less than N-m, N is an integer greater than m, N is a length of the ZC sequence, and m is an integer greater than 0 and less than N/2.

The echo signal is a signal generated by reflecting the first signal by a target in an environment.

Any element in the third set in this application is an integer greater than m and less than N-m, a chirp rate of a first signal obtained by a first device based on a ZC sequence generated based on any element in the third set is greater than a chirp rate of a signal obtained based on a ZC sequence generated based on any element in a fourth set, and any element in the fourth set is an integer greater than 0 and less than or equal to m, or an integer greater than or equal to N-m and less than N. Therefore, when the second device performs ranging on the target based on the received echo signal of the first signal, an obtained ranging error is small.

For beneficial effects of the fourth aspect, refer to the descriptions in the third aspect. Details are not described herein again.

With reference to the fourth aspect, in some implementations of the fourth aspect, the method further includes: receiving first information from a first device, where the first information includes the root value and the length of the ZC sequence, and/or information about a time domain resource and/or a frequency domain resource occupied by the first signal.

With reference to the third aspect and the fourth aspect, in some implementations of the third aspect and the fourth aspect, the elements in the third set include: 11, 12, 13, 14, 15, 16, 24, N-11, N-12, N-13, N-14, N-15, N-16, or N-24.

With reference to the third aspect and the fourth aspect, in some implementations of the third aspect and the fourth aspect, m is an integer greater than or equal to 3 and less than or equal to 15.

With reference to the third aspect and the fourth aspect, in some implementations of the third aspect and the fourth aspect, a quantity of resource blocks RBs occupied by the first signal is 264, N is 1583, and the elements in the third set includes: 12, 11, 14, 16, 13, 18, 22, 24, 17, 36, 23, 15, 20, 33, 48, 31, 30, 44, 19, 26, 1571, 1572, 1569, 1567, 1570, 1565, 1561, 1559, 1566, 1547, 1560, 1568, 1563, 1550, 1535, 1552, 1553, 1539, 1564, or 1557.

With reference to the third aspect and the fourth aspect, in some implementations of the third aspect and the fourth aspect, a quantity of RBs occupied by the first signal is 132, N is 787, and the elements in the third set include: 11, 24, 28, 15, 14, 13, 16, 27, 12, 29, 22, 34, 21, 23, 30, 18, 26, 20, 44, 36, 776, 763, 759, 772, 773, 774, 771, 760, 775, 758, 765, 753, 766, 764, 757, 769, 761, 767, 743, or 751.

With reference to the third aspect and the fourth aspect, in some implementations of the third aspect and the fourth aspect, a quantity of RBs occupied by the first signal is 66, N is 389, and the elements in the third set include: 13, 15, 30, 17, 11, 78, 26, 14, 16, 19, 81, 39, 24, 21, 49, 23, 35, 36, 12, 79, 376, 374, 359, 372, 378, 311, 363, 375, 373, 370, 308, 350, 365, 368, 340, 366, 354, 353, 377, or 310.

With reference to the third aspect and the fourth aspect, in some implementations of the third aspect and the fourth aspect, a quantity of RBs occupied by the first signal is 32, N is 191, and the elements in the third set include: 12, 24, 19, 16, 15, 38, 17, 39, 27, 11, 14, 37, 42, 21, 32, 13, 20, 48, 25, 41, 179, 167, 172, 175, 176, 153, 174, 152, 164, 180, 177, 154, 149, 170, 159, 178, 171, 143, 166, or 150.

The third set in this application may include one or more elements. When m has different values, the third set may include a same element.

A first signal obtained based on a ZC sequence generated based on the element included in the third set that corresponds to N being 1583, N being 787, N being 389, or N being 191 has a low PAPR and a large chirp rate. Therefore, when sensing is performed by using the first signal obtained based on the ZC sequence generated based on the element in the third set, obtained ranging precision is high.

With reference to the third aspect and the fourth aspect, in some implementations of the third aspect and the fourth aspect, the first signal is used for sensing, or the first signal is used for sensing and channel measurement, or the first signal is used for sensing and channel estimation, or the first signal is used for sensing and downlink data demodulation.

With reference to the third aspect and the fourth aspect, in some implementations of the third aspect and the fourth aspect, the length of the ZC sequence is a prime number, the ZC sequence is mapped to N subcarriers, and the N subcarriers are distributed at equal intervals in frequency domain.

With reference to the third aspect and the fourth aspect, in some implementations of the third aspect and the fourth aspect, the element included in the third set is determined based on a chirp rate and/or a peak-to-average power ratio PAPR.

With reference to the third aspect and the fourth aspect, in some implementations of the third aspect and the fourth aspect, a chirp rate of an OFDM signal obtained based on a ZC sequence generated based on any element in the third set is greater than a chirp rate of an OFDM signal obtained based on a ZC sequence generated based on any element in a fourth set.

With reference to the third aspect and the fourth aspect, in some implementations of the third aspect and the fourth aspect, a PAPR of the OFDM signal obtained based on the ZC sequence generated based on any element in the third set is less than a PAPR of the OFDM signal obtained based on the ZC sequence generated based on any element in the fourth set. Therefore, the first device generates different ZC sequences based on the element in the third set, and a PAPR of the generated first signal is small.

In this application, a value of any element in the fourth set is an integer greater than 0 and less than or equal to m, or an integer greater than or equal to N-m and less than N; or the element included in the fourth set is an element other than the element included in the third set in all integers from 1 to N-1.

According to a fifth aspect, a signal transmission method is provided. The method includes: A first device generates a first signal based on a ZC sequence. The first device sends the first signal. A second device receives an echo signal of the first signal, where the echo signal is a signal generated by reflecting the first signal by a target.

A root value of the ZC sequence is an element in a first set, a value of a multiplicative inverse of any element in the first set modulo N is an integer greater than n and less than N-n, N is an integer greater than n, N is a length of the ZC sequence, and n is an integer greater than 0 and less than N/2. Alternatively, a value of any element in the first set is an integer greater than m and less than N-m, N is an integer greater than m, N is a length of the ZC sequence, and m is an integer greater than 0 and less than N/2.

It should be understood that the element included in the first set is determined based on a chirp rate and/or a PAPR.

For beneficial effects of the fifth aspect, refer to the descriptions of the beneficial effects of the first aspect and the third aspect. Details are not described herein again.

With reference to the fifth aspect, in some implementations of the fifth aspect, the method further includes: The first device sends first information to the second device, where the first information includes the root value and the length of the ZC sequence, and/or information about a time domain resource and/or a frequency domain resource occupied by the first signal.

According to a sixth aspect, a communication apparatus is provided, and includes a processing module and a transceiver module.

For example, the processing module is configured to generate a first signal based on a ZC sequence, where a root value of the ZC sequence is an element in a first set, a value of a multiplicative inverse of any element in the first set modulo N is an integer greater than n and less than N-n, N is an integer greater than n, N is a length of the ZC sequence, and n is an integer greater than 0 and less than N/2. The transceiver module is configured to send the first signal.

For example, the processing module is configured to generate a first signal based on a ZC sequence, where a root value of the ZC sequence is an element in a third set, a value of any element in the third set is an integer greater than m and less than N-m, N is an integer greater than m, N is a length of the ZC sequence, and m is an integer greater than 0 and less than N/2. The transceiver module is configured to send the first signal.

With reference to the sixth aspect, in some implementations of the sixth aspect, the transceiver module is further configured to receive an echo signal of the first signal.

With reference to the sixth aspect, in some implementations of the sixth aspect, the transceiver module is further configured to send first information to a second device, where the first information includes the root value and the length of the ZC sequence, and/or information about a time domain resource and/or a frequency domain resource occupied by the first signal.

According to a seventh aspect, a communication apparatus is provided, and includes a transceiver module, configured to receive an echo signal of a first signal, where the first signal is generated based on a ZC sequence. A root value of the ZC sequence is an element in a first set, a value of a multiplicative inverse of any element in the first set modulo N is an integer greater than n and less than N-n, N is an integer greater than n, N is a length of the ZC sequence, and n is an integer greater than 0 and less than N/2. Alternatively, a root value of the ZC sequence is an element in a third set, a value of any element in the third set is an integer greater than m and less than N-m, N is an integer greater than m, N is a length of the ZC sequence, and m is an integer greater than 0 and less than N/2.

With reference to the seventh aspect, in some implementations of the seventh aspect, the transceiver module is further configured to receive first information from a first device, where the first information includes the root value and the length of the ZC sequence, and/or information about a time domain resource and/or a frequency domain resource occupied by the first signal.

According to an eighth aspect, a communication apparatus is provided, and includes a processor. The processor is configured to invoke a computer program from a memory and run the computer program, to enable the communication apparatus to perform the method in any one of the possible implementations of any one of the foregoing aspects.

Optionally, the communication apparatus further includes the memory, and the processor is configured to store the computer program.

Optionally, the communication device further includes a transmitter (transmitter machine) and a receiver (receiver machine). The transmitter and the receiver may be disposed separately, or may be integrated together and are referred to as a transceiver (transceiver machine).

According to a ninth aspect, a computer program product is provided. The computer program product includes a computer program (which may also be referred to as code or instructions). When the computer program is run, a computer is enabled to perform the method in any one of the possible implementations of any one of the foregoing aspects.

According to a tenth aspect, a computer-readable storage medium is provided. The computer-readable storage medium stores a computer program (which may also be referred to as code or instructions). When the computer program is run on a computer, the computer is enabled to perform the method in any one of the possible implementations of any one of the foregoing aspects.

According to an eleventh aspect, a chip system is provided. The chip system includes at least one processor, configured to support implementation of a function in any one of the foregoing aspects, for example, receiving or processing data in the foregoing methods.

In a possible design, the chip system further includes a memory. The memory is configured to store program instructions and data, and the memory is located inside the processor or outside the processor.

Optionally, the chip system may include a chip, or may include a chip and another discrete device.

According to a twelfth aspect, a communication system is provided, and includes a first device and a second device. The first device is configured to implement the method in any one of the possible implementations of the first aspect, and the second device is configured to implement the method in any one of the possible implementations of the second aspect. Alternatively, the first device is configured to implement the method in any one of the possible implementations of the third aspect, and the second device is configured to implement the method in any one of the possible implementations of the fourth aspect.

In a possible design, the communication system may further include another device that interacts with the first device and/or the second device in the solutions provided in this application.

## BRIEF DESCRIPTION OF DRAWINGS

FIG. 1 is a diagram of a communication scenario applicable to an embodiment of this application;
FIG. 2 is a diagram of another communication scenario applicable to an embodiment of this application;
FIG. 3 is a diagram of still another communication scenario applicable to an embodiment of this application;
FIG. 4 is a schematic flowchart of a signal transmission method according to an embodiment of this application;
FIG. 5 is a schematic flowchart of a method for generating a first signal according to an embodiment of this application;
FIG. 6 is a schematic flowchart of another method for generating a first signal according to an embodiment of this application;
FIG. 7 is a diagram of PAPRs of sensing signals corresponding to different root values;
FIG. 8 is a schematic block diagram of a communication apparatus according to an embodiment of this application; and
FIG. 9 is a schematic block diagram of another communication apparatus according to an embodiment of this application.

## DESCRIPTION OF EMBODIMENTS

The following describes technical solutions of this application with reference to the accompanying drawings.

To describe the technical solutions of this application more clearly, the following explains related concepts in this application.

1. Sensing may also be referred to as detection, to be specific, detection of a parameter of a target in a physical environment. For example, a radar detection system detects the target by transmitting an electromagnetic wave and analyzing an echo signal reflected by an object. The parameter of the target may include a location of the target, a speed of the target, and the like.

2. A sensing signal is a signal used to sense a to-be-sensed target. The sensing signal may also be referred to as a detection signal, a linear frequency modulation signal, a radar signal, a radar sensing signal, a radar detection signal, an environment sensing signal, or the like. In some examples, the sensing signal may alternatively be a pulse signal or a signal in a wireless communication system. For example, the sensing signal may be an OFDM signal obtained by modulating a particular sequence on a subcarrier, and the particular sequence may be any one of the following sequences: a Zadoff-Chu sequence (referred to as a ZC sequence for short), a pseudo-random sequence, a predefined sequence, or the like. The pseudo-random sequence may include a longest linear feedback shift register sequence (referred to as an m sequence for short), a Gold sequence, or the like. The predefined sequence may include a random data symbol, which may be, for example, a random data symbol modulated in a manner such as quadrature phase shift keying (quadrature phase shift keying, QPSK) or 16 quadrature amplitude modulation (quadrature amplitude modulation, QAM).

3. Echo signal: The echo signal is a signal generated by reflecting a sensing signal by a target. A delay of the echo signal relative to the sensing signal may reflect a distance from the target. A Doppler frequency shift of the echo signal relative to the sensing signal may reflect a speed of the target.

4. Coherent processing time is a time period longer than a periodicity for sending a sensing signal. For example, a network device sends a plurality of sensing signals within the coherent processing time, and the network device or another network device receives an echo signal of each of the plurality of sensing signals, and performs coherent combining processing on echo signals of all the sensing signals sent within the coherent time, to implement ranging and speed measurement on a target.

5. Sensing processing may also be referred to as coherent combining processing, and may be implemented by performing matched filtering and Fourier transform on echo signals of all sensing signals sent within coherent processing time.

6. ZC sequence: A formula for the ZC sequence may be expressed as:

$$x_u[i] = exp\left(-\frac{j\pi ui(i+1)}{N}\right) \qquad\qquad (1)$$

$j$ is a unit of an imaginary number, $u$ is a root value (root value) of the ZC sequence, $u$ may also be referred to as a sequence number (sequence number), $N$ is a length of the ZC sequence, and $x_u[i]$ represents an element numbered i in the ZC sequence whose root value is $u$. $u$ is an integer greater than or equal to 1 and less than or equal to N-1, and i=0, 1, ..., N-1.

7. Modulo-N multiplicative inverse: A set A is denoted as {0, 1, ..., N-1}, where N is a positive integer. For any element a in the set A, if there is an element b $\in$ A, and (a×b) mod N=1 is met, b is referred to as a multiplicative inverse of a modulo N, or b is referred to as a multiplicative inverse of a modulo N for short. The set A includes all integers greater than or equal to 0 and less than or equal to N-1. Therefore, both the elements a and b in the set A are integers greater than or equal to 0 and less than or equal to N-1. It should be noted that, when N is a prime number, for any element a in the set A, there is a unique element b $\in$ A, and (a×b) mod N=1 is met.

8. A chirp rate (chirp rate) is a derivative of a signal frequency with respect to time. Particularly, frequencies of signals such as a linear frequency modulation (linear frequency modulation) signal, a frequency modulated continuous wave (frequency modulated continuous wave), and an OFDM signal generated based on a ZC sequence change linearly with time, that is, chirp rates of these signals each are a constant.

9. A communication signal is a signal that is transmitted between communication devices and that is used for communication. For example, the communication signal includes a signal transmitted between a network device and a terminal. For example, a signal carried on a physical downlink shared channel (physical downlink shared channel, PDSCH) is a communication signal. For another example, a demodulation reference signal (demodulation reference signal, DMRS) is a communication signal. For another example, a channel state information-reference signal (channel state information-reference signal, CSI-RS) is a communication signal.

10. Peak-to-average power ratio (peak-to-average power ratio, PAPR): A PAPR of a signal is a ratio of a peak value of the signal to an average value of the signal.

11. Ranging precision is a degree of accuracy of distance estimation for a target. For example, a larger distance estimation error for the target indicates higher ranging precision, and a smaller distance estimation error for the target indicates lower ranging precision.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G mobile communication system, a new radio (new radio, NR) system or another evolved communication system, a next-generation mobile communication system of the 5G communication system, a 6th generation (6th generation, 6G) communication system, or a future communication system.

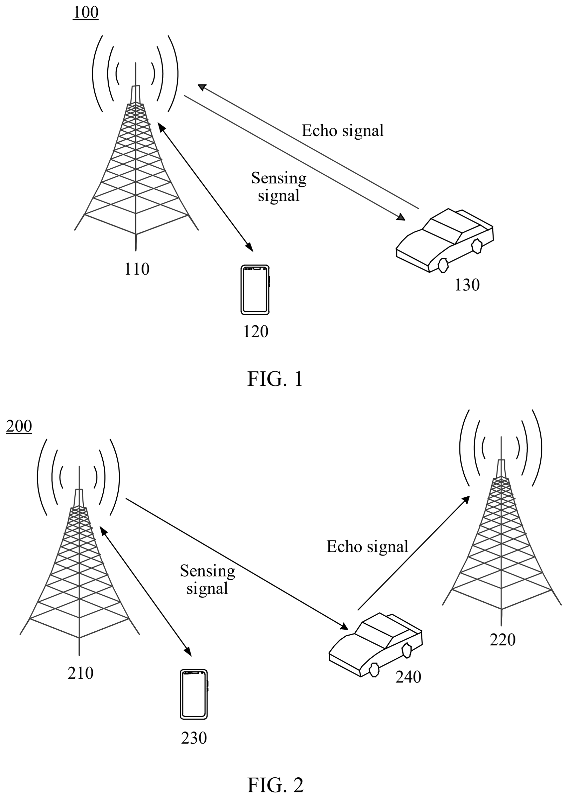

For ease of understanding of embodiments of this application, communication scenarios applicable to embodiments of this application are first described in detail with reference to FIG. 1 to FIG. 3.

FIG. 1 is a diagram of a communication scenario 100 applicable to an embodiment of this application. As shown in FIG. 1, a network device 110, a terminal 120, and a target 130 are shown in the scenario 100. Data communication may be performed between the network device 110 and the terminal 120 through a wireless connection. Alternatively, the network device 110 may send a sensing signal to the target 130, and receive an echo signal generated by reflecting the sensing signal by the target, so that sensing processing can be performed based on the sensing signal and the echo signal, to obtain information such as a location and a speed of the target. Alternatively, the network device 110 may send a communication signal used for sensing to the target 130, that is, the signal is used for both communication and sensing. For example, for a demodulation reference signal used for sensing, the signal is used for both channel estimation and sensing.

FIG. 2 is a diagram of another communication scenario 200 applicable to an embodiment of this application. As shown in FIG. 2, a network device 210, a network device 220, a terminal 230, and a target 240 are shown in the scenario 200. Data communication may be performed between the network device 210 and the terminal 230 through a wireless connection. Alternatively, the network device 210 may send a sensing signal to the target 240, and the other network device 220 receives an echo signal generated by reflecting the sensing signal by the target, and performs sensing processing, to obtain information such as a location and a speed of the target. Alternatively, the network device 210 may send a communication signal used for sensing to the target 240, that is, the signal is used for both communication and sensing. For example, for a demodulation reference signal used for sensing, the signal is used for both channel estimation and sensing.

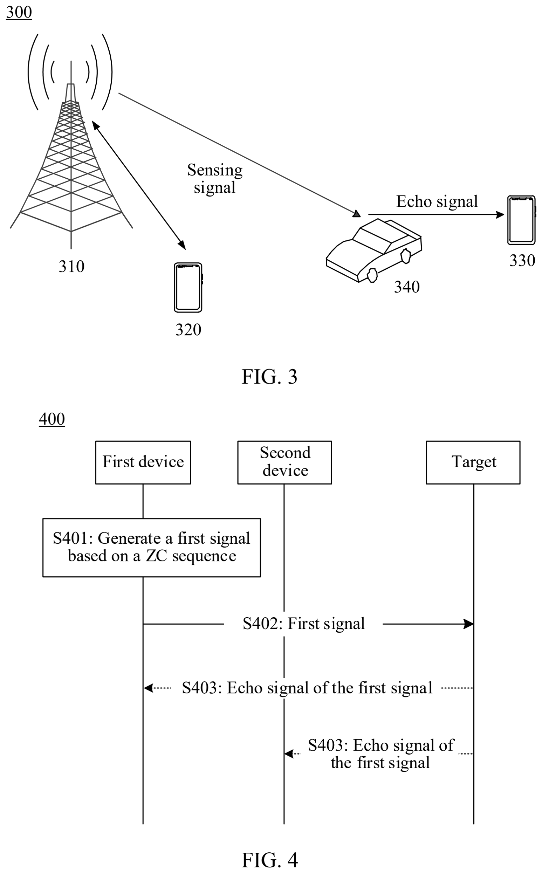

FIG. 3 is a diagram of still another communication scenario 300 applicable to an embodiment of this application. As shown in FIG. 3, a network device 310, a terminal 320, a terminal 330, and a target 340 are shown in the scenario 300. Data communication may be performed between the network device 310 and the terminal 320 through a wireless connection. Alternatively, the network device 310 may send a sensing signal to the target 340, and the other terminal 330 receives an echo signal generated by reflecting the sensing signal by the target, and performs sensing processing, to obtain information such as a location and a speed of the target. Alternatively, the network device 310 may send a communication signal used for sensing to the target 340, that is, the signal is used for both communication and sensing. For example, for a demodulation reference signal used for sensing, the signal is used for both channel estimation and sensing.

It should be understood that the devices that send the sensing signals in the scenarios shown in FIG. 1 to FIG. 3 may be replaced with terminals.

It should be noted that the network device 110, the network device 210, and the network device 310 in FIG. 1 to FIG. 3 may alternatively send the sensing signal and the communication signal in a time division multiplexing manner. To be specific, the network device does not send the communication signal when sending the sensing signal, and the network device does not send the sensing signal when sending the communication signal. Alternatively, the network device sends the sensing signal and the communication signal in a multiplexing manner like a frequency division multiplexing manner or a space division multiplexing manner. In this case, the network device may simultaneously send the sensing signal and the communication signal, that is, simultaneously perform sensing and communication.

A terminal (for example, the terminal 120 shown in FIG. 1, the terminal 230 shown in FIG. 2, or the terminal 320 and the terminal 330 in FIG. 3) in embodiments of this application is a device having a wireless transceiver function, and may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal may be a device that provides voice and/or data connectivity for a user, for example, a handheld device or a vehicle-mounted device that has a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a sensor terminal, a sensing terminal, a device integrating communication and sensing, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an uncrewed aerial vehicle, a terminal in a 5G network, or a terminal in a future evolved public land mobile communication network (public land mobile network, PLMN). A specific technology, a device form, and a name that are used by the terminal are not limited in embodiments of this application. However, it should be noted that the terminal in embodiments of this application includes a main receiver and a low power consumption receiver.

The network device in this application may be a device (for example, the network device 110 shown in FIG. 1, the network device 210 and the network device 220 in FIG. 2, or the network device 310 in FIG. 3) configured to communicate with the terminal, or may be a device that connects the terminal to a wireless network. The network device may be an apparatus that provides a wireless communication function for a terminal device in a radio access network (radio access network, RAN), and is referred to as a RAN device. For example, the network device may be a base station (base station), an evolved NodeB (evolved NodeB, eNodeB), a transmission reception point (transmission reception point, TRP), a home base station (for example, a home evolved NodeB or a home NodeB, HNB), a wireless fidelity (wireless fidelity, Wi-Fi) access point (access point, AP), a mobile switching center, a next generation NodeB (next generation NodeB, gNB) in a 5G mobile communication system, a next generation NodeB in a 6G mobile communication system, a base station in a future mobile communication system, or the like. The network device may alternatively be a module or a unit that completes some functions of a base station, for example, may be a central unit (central unit, CU), a distributed unit (distributed unit, DU), a remote radio unit (remote radio unit, RRU), a baseband unit (baseband unit, BBU), or the like. The network device may alternatively be a device functioning as a base station in a device-to-device (device-to-device, D2D) communication system, an uncrewed aerial vehicle communication system, a vehicle-to-vehicle (vehicle-to-vehicle, V2V) communication system, a machine-to-machine (machine-to-machine, M2M) communication system, and an internet of things (internet of things, IoT) communication system. The network device may alternatively be a network device in a non-terrestrial network (non-terrestrial network, NTN). In other words, the network device may be deployed on a high-altitude platform or a satellite. The network device may be a macro base station, or may be a micro base station or an indoor base station, or may be a relay node, a donor node, or the like. A specific technology, a device form, and a name that are used by the network device are not limited in embodiments of this application.

In embodiments of this application, a function of the network device may be performed by a module (for example, a chip) in the network device, or may be performed by a control subsystem including the function of the network device. The control subsystem including the function of the network device herein may be a control center in the foregoing application scenarios of the terminal, for example, a smart grid, industrial control, smart transportation, a smart city, and an integrated sensing and communication system. A function of the terminal may be performed by a module (for example, a chip or a modem) in the terminal, or may be performed by an apparatus including the function of the terminal.

The network device and the terminal in this application may be deployed on land, including an indoor device, an outdoor device, a handheld device, a wearable device, or a vehicle-mounted device; may be deployed on a water surface (for example, on a ship); or may be deployed in the air (for example, on a plane, a balloon, and a satellite). Application scenarios of the network device and the terminal are not limited in this application.

The target in this application may be various tangible objects that can reflect an electromagnetic wave in an environment, for example, a ground object such as a mountain, a forest, or a building, and may further include a movable object such as a vehicle, an uncrewed aerial vehicle, a pedestrian, or a terminal. The target may also be referred to as a target object, a sensed target, a detected target, a sensed object, a detected object, a sensed device, or the like. This is not limited in embodiments of this application.

In the communication scenarios shown in FIG. 1 to FIG. 3, the network device may implement, by using various propagation characteristics of the sensing signal used as an electromagnetic wave, sensing functions such as positioning, detecting, imaging, and identifying the target, to obtain information about a surrounding physical environment, explore a communication capability, and improve user experience.

In some embodiments, the sensing signal is obtained based on a ZC sequence. In other words, the sensing signal is an OFDM signal obtained by modulating the ZC sequence on a subcarrier. However, when the sensing signal generated based on the ZC sequence is used to sense the target, ranging precision for the target may be affected due to different bandwidths of the sensing signal or different chirp rates of the sensing signal. For example, a larger bandwidth of the sensing signal indicates higher ranging precision, and a smaller chirp rate of the sensing signal indicates a larger distance estimation error for the target.

Therefore, to improve ranging precision for the target, the network device may perform sensing ranging by using a sensing signal with a large bandwidth. However, a larger bandwidth of the sensing signal indicates a longer length of a ZC sequence used to generate the sensing signal, and further indicates a larger value range of a root value of the ZC sequence. Chirp rates of sensing signals generated based on ZC sequences obtained based on different root values are different. Consequently, when sensing is performed by using sensing signals generated based on ZC sequences obtained based on different root values, ranging precision is different. Therefore, how to select a ZC sequence to avoid a problem of a large ranging error for a sensing signal generated based on the ZC sequence urgently needs to be resolved.

In view of this, an embodiment of this application provides a signal transmission method. A first device generates a ZC sequence based on an element in a first set, and then generates a first signal based on the obtained ZC sequence. A multiplicative inverse of any element in the first set modulo N is an integer greater than n and less than N-n, and n is an integer greater than 0 and less than N/2. In other words, for the elements included in the first set, a root value corresponding to a signal with a small chirp rate is removed from N-1 OFDM signals generated based on ZC sequences whose lengths each are N. Therefore, when the first device performs sensing by using the first signal generated based on the ZC sequence obtained based on the element in the first set, a ranging error is small.

Before the sensing signal transmission method provided in this application is described, the following several descriptions are first provided.

First, in embodiments shown in this specification, terms and English abbreviations such as a PAPR, a chirp rate, and a sensing signal are all examples provided for ease of description, and should not constitute any limitation on this application. This application does not exclude a possibility of defining another term that can implement a same or similar function in an existing or future protocol.

Second, in the following embodiments, the term "example", "for example", or the like is used to represent giving an example, an illustration, or a description. Any embodiment or design scheme described as an "example" or "for example" in this application should not be construed as being more preferred or more advantageous than another embodiment or design scheme. Exactly, use of the term "example", "for example", or the like is intended to present a related concept in a specific manner.

Third, "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate: a, b, c, a and b, a and c, b and c, or a, b, and c, where a, b, and c may be single or may be plural.

With reference to FIG. 4, the following describes in detail the sensing signal method provided in this embodiment of this application. The sensing signal transmission method may be applied to the communication scenarios shown in FIG. 1 to FIG. 3, and this embodiment of this application is not limited thereto.

In a flowchart shown in FIG. 4, the method is shown from a perspective of interaction between communication devices, and an execution body of the method is not limited in this application. For example, a first device in FIG. 4 may be a network device, or may be a terminal, or may be a chip, a chip system, or a processor that can support the network device in implementing the method, or may be a logical module or software that can implement all or some functions of the network device. A second device in FIG. 4 may be a network device, or may be a terminal, or may be a chip, a chip system, or a processor that can support the second device in implementing the method, or may be a logical module or software that can implement all or some functions of the second device.

FIG. 4 is a schematic flowchart of a signal transmission method according to an embodiment of this application. As shown in FIG. 4, the method 400 may include S401 to S403. S403 is an optional step. The following describes in detail the steps shown in FIG. 4.

S401: A first device generates a first signal based on a ZC sequence. The first signal is a signal used for sensing.

A root value of the ZC sequence is an element in a first set, a value of a multiplicative inverse of any element in the first set modulo N is an integer greater than n and less than N-n, N is an integer greater than n, and n is an integer greater than 0 and less than N/2. Alternatively, a root value of the ZC sequence is an element in a third set, a value of any element in the third set is an integer greater than m and less than N-m, N is an integer greater than m, and m is an integer greater than 0 and less than N/2.

N is a length of the ZC sequence, and the length N of the ZC sequence is a prime number.

It can be learned with reference to the foregoing definition of the modulo-N multiplicative inverse that, a value q of a multiplicative inverse of any element u in the first set modulo N is an integer greater than n and less than N-n, where q meets $(u \times q) \bmod N = 1$.

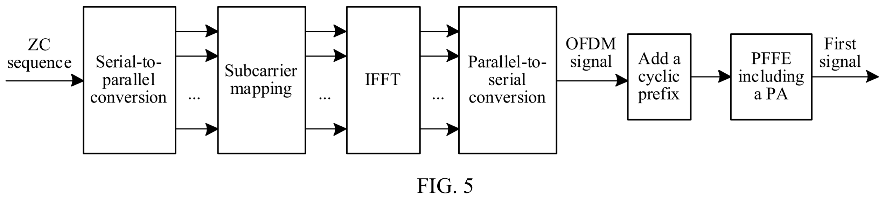

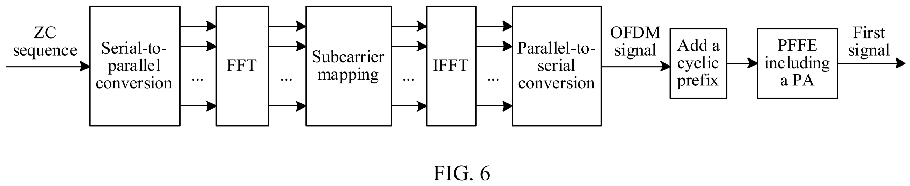

It should be noted that when the root value of the ZC sequence is obtained from the first set or the third set, the first device generates the first signal based on the ZC sequence in different manners. The following separately describes, with reference to FIG. 5 and FIG. 6, two implementations in which the first device generates the first signal based on the ZC sequence.

In a manner 1, the root value of the ZC sequence is an element in the first set, and that the first device generates the first signal based on the ZC sequence may include steps shown in FIG. 5. As shown in FIG. 5, the first device respectively maps N elements in the ZC sequence to subcarriers of an OFDM signal, and sequentially performs inverse fast Fourier transform (inverse fast Fourier transform, IFFT) and parallel-to-serial conversion to obtain the OFDM signal; and adds a cyclic prefix to the OFDM signal, and obtains a radio frequency signal by using a radio frequency front end (radio frequency front end, RFEE) including a power amplifier (power amplifier, PA), where the radio frequency signal is the first signal.

In a manner 2, the root value of the ZC sequence is an element in the third set, and that the first device generates the first signal based on the ZC sequence includes steps shown in FIG. 6. As shown in FIG. 6, the first device performs discrete Fourier transform on N elements in the ZC sequence to obtain a frequency domain sequence (N elements) of the ZC sequence; respectively maps N elements in the frequency domain sequence of the ZC sequence to subcarriers of an OFDM signal, and sequentially performs IFFT and parallel-to-serial conversion to obtain the OFDM signal; and adds a cyclic prefix to the OFDM signal, and obtains a radio frequency signal by using an RFEE including a PA, where the radio frequency signal is the first signal. Discrete Fourier transform (discrete Fourier transform, DFT) may be implemented through fast Fourier transform (fast Fourier transform, FFT).

Serial-to-parallel conversion shown in FIG. 5 and FIG. 6 refers to converting a serial data flow into a parallel data flow. Subcarrier mapping refers to mapping a ZC sequence to a corresponding subcarrier. IFFT refers to performing IFFT on a value on a subcarrier. Parallel-to-serial conversion refers to converting a parallel data flow into a serial data flow. Adding a cyclic prefix refers to inserting the last several sampling points of a signal into a position before a first sampling point of the signal. The RFEE including the PA refers to converting a digital baseband signal into an analog baseband signal, performing up conversion to obtain a radio frequency signal, amplifying the radio frequency signal, and sending the radio frequency signal from an antenna.

In this embodiment of this application, the ZC sequence used to generate the first signal may be mapped to N subcarriers, and the N subcarriers may be distributed at equal intervals in frequency domain. For example, an element numbered i in the frequency domain sequence of the ZC sequence (or the ZC sequence) may be mapped to a subcarrier numbered $t \times i$, where i is an integer greater than or equal to 0, and t is a positive integer. For example, when t is 2, there is one subcarrier between any two adjacent subcarriers that carry the ZC sequence in frequency domain. When t is 3, there are two subcarriers between any two adjacent subcarriers that carry the ZC sequence in frequency domain.

Optionally, the first signal in this embodiment of this application is used for sensing, or is used for sensing and channel measurement, or is used for sensing and channel estimation, or is used for sensing and downlink data demodulation. For example, the first signal is a sensing signal. For another example, the first signal is a demodulation reference signal (demodulation reference signal, DMRS), and is used for channel estimation and sensing. For another example, the first signal is a channel state information-reference signal (channel state information-reference signal, CSI-RS), and is used for channel measurement and sensing. For another example, the first signal is a demodulation reference signal in a physical downlink shared channel (physical downlink shared channel, PDSCH), and is used for downlink data demodulation and sensing.

S402: The first device sends the first signal.

S403: The first device receives an echo signal of the first signal. Alternatively, a second device receives the echo signal of the first signal.

The echo signal is a signal generated by reflecting, by a target in an environment, the first signal sent by the first device.

Optionally, when receiving the echo signal of the first signal, the first device or the second device senses the target based on the first signal and the echo signal of the first signal.

In this embodiment of this application, the first device generates a ZC sequence based on an element in the first set, and then generates a first signal based on the obtained ZC sequence. The first set is a proper subset of a set {1, 2, ..., N-1}, where the set {1, 2, ..., N-1} is a value range of the root value of the ZC sequence whose length is N, and the first set does not include an element whose modulo-N multiplicative inverse is less than or equal to n and greater than or equal to N-n. When a multiplicative inverse of the root value modulo N is less than or equal to n and greater than or equal to N-n, a chirp rate of the first signal generated based on the ZC sequence with the root value is small. When the element in the first set is used as the root value of the ZC sequence, a chirp rate of the first signal generated based on the ZC sequence is large. Therefore, when the first device performs sensing ranging by using the first signal obtained based on the ZC sequence generated based on the element in the first set, a ranging error is small.

For example, a value range of a multiplicative inverse of the element in the first set modulo N varies with a value of n. For example, when n=1, the value of the multiplicative inverse of any element in the first set modulo N is an integer greater than 1 and less than N-1, that is, does not include 1 or N-1. When n=2, the value of the multiplicative inverse of any element in the first set modulo N is an integer greater than 2 and less than N-1, that is, does not include 1, 2, N-2, or N-1. However, it should be understood that, when n has different values, quantities of elements in the first set may be the same or may be different.

In an optional embodiment, n is an integer greater than or equal to 3 and less than or equal to 15.

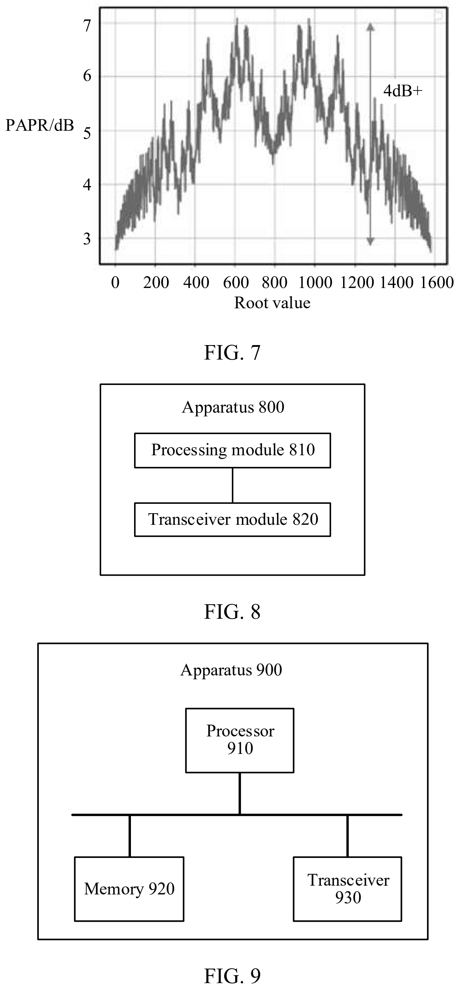

It should be understood that PAPRs of first signals generated based on ZC sequences obtained based on different root values are different. As shown in FIG. 7, when a bandwidth of a first signal is 400 megahertz (megahertz, MHz), PAPRs of first signals generated based on ZC sequences obtained based on different root values are different, and a maximum difference may be at least 4 decibels (decibels, dB). Because the elements included in the first set (or the third set) are determined based on a chirp rate, for the first signal generated based on the ZC sequence obtained based on the element included in the first set, a PAPR of the first signal may be large. When the PAPR of the first signal is large, to prevent a signal amplitude from entering a non-linear area, a power amplifier of the first device needs to reduce a signal transmit power, and reduce efficiency of the power amplifier. Therefore, to enable the PAPR of the first signal generated based on the ZC sequence obtained based on the element included in the first set to be small, in this application, both the chirp rate and the PAPR may be considered when the element included in the first set is determined. For example, a part of root values may be first determined based on the chirp rate, and then another part of root values corresponding to a first signal with a small PAPR is selected from the determined part of root values based on the PAPR. In this case, the obtained another part of root values are the elements included in the first set (or the third set).

The following uses n=10 as an example to separately describe elements that may be included in the first set when a quantity of RBs occupied by the first signal is 264, 132, 66, or 32. It should be understood that the elements included in the first set shown below are determined based on the chirp rate and the PAPR.

In an example 1, the quantity of RBs occupied by the first signal is 264, N is 1583, and the elements included in the first set are shown in Table 1.

Table 1

| Root value u | | | | | | | | | |
|---|---|---|---|---|---|---|---|---|---|
| 132 | 1451 | 144 | 1439 | 113 | 1470 | 487 | 1096 | 1484 | 99 |
| 66 | 1517 | 1539 | 44 | 88 | 1495 | 72 | 1511 | 838 | 745 |
| 48 | 1535 | 766 | 817 | 1170 | 413 | 554 | 1029 | 1372 | 211 |
| 33 | 1550 | 1035 | 548 | 36 | 1547 | 18 | 1565 | 190 | 1393 |

First signals generated by the first device based on ZC sequences obtained based on any two root values in Table 1 that sum up to N have a same PAPR and a same range Doppler coupling degree. For example, when 132+1451=1583, first signals generated based on ZC sequences respectively obtained by using 132 and 1451 as root values have a same PAPR and a same range Doppler coupling degree. For another example, when 144+1439=1583, first signals generated based on ZC sequences respectively obtained by using 144 and 1439 as root values have a same PAPR and a same range Doppler coupling degree. A range of PAPRs of first signals generated based on ZC sequences obtained based on the root values shown in Table 1 is 2.784 dB to 3.1485 dB. Range Doppler coupling means that when a sensing signal generated based on a ZC sequence is used to sense a target, a Doppler frequency shift that is of an echo signal reflected by the target and that is relative to the sensing signal causes an error in distance estimation for the target. Generally, a larger Doppler frequency shift that is of the echo signal reflected by the target and that is relative to the sensing signal indicates a larger error in distance estimation for the target, and a smaller chirp rate of the sensing signal indicates a larger error in distance estimation for the target. In other words, first signals generated based on ZC sequences obtained based on any two root values that sum up to N have a same PAPR and same ranging precision.

A value of a multiplicative inverse of the root value shown in Table 1 modulo N is greater than 10 and less than N-10. For example, the root value u=132, a multiplicative inverse of 132 modulo 1583 is 12, and 12 is greater than 10 and less than 1583-10; the root value u=1451, a multiplicative inverse of 1451 modulo 1583 is 1571, and 1571 is greater than 10 and less than 1583-10; or the root value u=144, a multiplicative inverse of 144 modulo 1583 is 11, and 11 is greater than 10 and less than 1583-10.

It should be understood that, when n is another value, the root value shown in Table 1 may change. In other words, elements included in the first set may vary with a value of n. For example, when n=11, 144 and 1439 in Table 1 may be replaced with 250 and 1333. For another example, when n=12, 144, 1439, 132, and 1451 in Table 1 may be replaced with 250, 1333, 1193, and 390.

In an example 2, the quantity of RBs occupied by the first signal is 132, N is 787, and the elements included in the first set are shown in Table 2.

Table 2

| Root value u | | | | | | | | | |
|---|---|---|---|---|---|---|---|---|---|
| 164 | 623 | 644 | 143 | 322 | 465 | 105 | 682 | 281 | 506 |
| 246 | 541 | 190 | 597 | 534 | 253 | 121 | 666 | 459 | 328 |
| 712 | 75 | 308 | 479 | 162 | 625 | 204 | 583 | 324 | 463 |
| 341 | 446 | 306 | 481 | 454 | 333 | 161 | 626 | 118 | 669 |

First signals generated by the first device based on ZC sequences obtained based on any two root values in Table 2 that sum up to N have a same PAPR and a same range Doppler coupling degree. For example, when 164+623=787, first signals generated based on ZC sequences respectively obtained by using 164 and 623 as root values have a same PAPR and a same range Doppler coupling degree. For another example, when 246+541=787, first signals generated based on ZC sequences respectively obtained by using 246 and 541 as root values have a same PAPR and a same range Doppler coupling degree. A range of PAPRs of first signals generated based on ZC sequences obtained based on the root values shown in Table 2 is 3.0856 dB to 3.3667 dB. For descriptions of the range Doppler coupling, refer to the related descriptions of Table 1. Details are not described herein again.

A value of a multiplicative inverse of the root value shown in Table 2 modulo N is greater than 10 and less than N-10. For example, the root value u=164, a multiplicative inverse of 164 modulo 787 is 24, and 24 is greater than 10 and less than 787-10; the root value u=623, a multiplicative inverse of 623 modulo 787 is 763, and 763 is greater than 10 and less than 787-10; or the root value u=644, a multiplicative inverse of 644 modulo 787 is 11, and 11 is greater than 10 and less than 787-10.

It should be understood that, when n is another value, the root value shown in Table 2 may change. In other words, the elements included in the first set may vary with a value of n. For example, when n=11, 644 and 143 in Table 2 may be replaced with 634 and 153. For another example, when n=12, 644, 143, 328, and 459 in Table 2 may be replaced with 634, 153, 63, and 724.

In an example 3, the quantity of RBs occupied by the first signal is 66, N=389, and the elements included in the first set are shown in Table 3.

Table 3

| Root value u | | | | | | | | | |
|---|---|---|---|---|---|---|---|---|---|
| 30 | 359 | 26 | 363 | 13 | 376 | 183 | 206 | 106 | 283 |
| 5 | 384 | 250 | 139 | 15 | 374 | 41 | 348 | 73 | 316 |
| 10 | 379 | 81 | 308 | 127 | 262 | 365 | 24 | 37 | 352 |
| 289 | 100 | 54 | 335 | 203 | 186 | 64 | 325 | 162 | 227 |

First signals generated by the first device based on ZC sequences obtained based on any two root values in Table 3 that sum up to N have a same PAPR and a same range Doppler coupling degree. For example, when 30+359=389, first signals generated based on ZC sequences respectively obtained by using 30 and 359 as root values have a same PAPR and a same range Doppler coupling degree. For another example, when 5+384=389, first signals generated based on ZC sequences respectively obtained by using 5 and 384 as root values have a same PAPR and a same range Doppler coupling degree. A range of PAPRs of first signals generated based on ZC sequences obtained based on the root values shown in Table 3 is 3.0006 dB to 3.5772 dB. For descriptions of the range Doppler coupling, refer to the related descriptions of Table 1. Details are not described herein again.

A value of a multiplicative inverse of the root value shown in Table 3 modulo N is greater than 10 and less than N-10. For example, the root value u=30, a multiplicative inverse of 30 modulo 389 is 13, and 13 is greater than 10 and less than 389-10; the root value u=359, a multiplicative inverse of 359 modulo 389 is 376, and 376 is greater than 10 and less than 389-10; or the root value u=26, a multiplicative inverse of 26 modulo 389 is 15, and 15 is greater than 10 and less than 389-10.

It should be understood that, when n is another value, the root value shown in Table 3 may change. In other words, the elements included in the first set may vary with a value of n. For example, when n=11, 283 and 106 in Table 3 may be replaced with 96 and 293. For another example, when n=12, 283, 106, 227, and 162 in Table 3 may be replaced with 96, 293, 53, and 336.

In an example 4, the quantity of RBs occupied by the first signal is 32, N=191, and the elements included in the first set are shown in Table 4.

Table 4

| Root value u | | | | | | | | | |
|---|---|---|---|---|---|---|---|---|---|
| 175 | 16 | 8 | 183 | 10 | 181 | 140 | 51 | 45 | 146 |
| 186 | 5 | 179 | 12 | 49 | 142 | 150 | 41 | 44 | 147 |
| 92 | 99 | 91 | 100 | 6 | 185 | 139 | 52 | 31 | 160 |
| 50 | 141 | 105 | 86 | 53 | 138 | 4 | 187 | 84 | 107 |

First signals generated by the first device based on ZC sequences obtained based on any two root values in Table 4 that sum up to N have a same PAPR and a same range Doppler coupling degree. For example, when 175+16=191, first signals generated based on ZC sequences respectively obtained by using 175 and 16 as root values have a same PAPR and a same range Doppler coupling degree. For another example, when 186+5=191, first signals generated based on ZC sequences respectively obtained by using 186 and 5 as root values have a same PAPR and a same range Doppler coupling degree. A range of PAPRs of first signals generated based on ZC sequences obtained based on the root values shown in Table 4 is 3.1294 dB to 4.0542 dB. For descriptions of the range Doppler coupling, refer to the related descriptions of Table 1. Details are not described herein again.

A value of a multiplicative inverse of the root value shown in Table 4 modulo N is greater than 10 and less than N-10. For example, the root value u=175, a multiplicative inverse of 175 modulo 191 is 179, and 179 is greater than 10 and less than 191-10; the root value u=16, a multiplicative inverse of 16 modulo 191 is 12, and 12 is greater than 10 and less than 191-10; or the root value u=8, a multiplicative inverse of 8 modulo 191 is 24, and 24 is greater than 10 and less than 191-10.

It should be understood that, when n is another value, the root value shown in Table 4 may change. In other words, the elements included in the first set may vary with a value of n. For example, when n=11, 139 and 52 in Table 4 may be replaced with 151 and 40. For another example, when n=12, 139, 52, 16, and 175 in Table 4 may be replaced with 151, 40, 14, and 177.

It should be further understood that the first set may include all or some of the elements shown in Table 1, Table 2, Table 3, or Table 4.

For example, the elements included in the first set in this embodiment of this application may be determined based on the following step I to step VI.

(I) Determine a length N of a ZC sequence.

For example, the length of the ZC sequence may be determined in the following manner: obtaining that a transmission bandwidth configuration is x (where x is an integer greater than 0) RBs, that is, a first signal may be carried on no more than x RBs; determining that a quantity of subcarriers included in the x RBs is 12x (where 12x indicates 12 times of x); and determining, based on a manner of mapping the ZC sequence to subcarriers, a quantity of subcarriers that can be occupied by the ZC sequence. For example, the manner of mapping the ZC sequence to the subcarriers includes mapping the ZC sequence to even-numbered subcarriers. In this case, the quantity of subcarriers that can be occupied by the ZC sequence is 6x (where 6x indicates 6 times of x). N is determined based on a mutual prime relationship between u and N in the formula (1), where N is a maximum prime number that is not greater than the quantity of subcarriers occupied by the ZC sequence. For example, a value of the length N is a maximum prime number that is not greater than 6x. For example, the transmission bandwidth configuration may be determined based on Table 5.

Table 5

| Subcarrier spacing (kHz) | 50 MHz/$N_{RB}$ | 100 MHz/$N_{RB}$ | 200 MHz/$N_{RB}$ | 400 MHz/$N_{RB}$ |
|---|---|---|---|---|
| 60 | 66 | 132 | 264 | / |
| 120 | 32 | 66 | 132 | 264 |

As shown in Table 5, 50 MHz/$N_{RB}$ represents a transmission bandwidth configuration (transmission bandwidth configuration) corresponding to a channel bandwidth (channel bandwidth) of 50 MHz, 100 MHz/$N_{RB}$ represents a transmission bandwidth configuration corresponding to a channel bandwidth of 100 MHz, 200 MHz/$N_{RB}$ represents a transmission bandwidth configuration corresponding to a channel bandwidth of 200 MHz, and 400 MHz/$N_{RB}$ represents a transmission bandwidth configuration corresponding to a channel bandwidth of 400 MHz. The channel bandwidth of 400 MHz is used as an example to describe, with reference to the foregoing manner of determining the length N, the value of N when the transmission bandwidth configuration is 264 RBs. For example, x=264. To be specific, the first signal may be carried on no more than 264 RBs, and a quantity of subcarriers included in the 264 RBs is 264×12=3168. When the first signal occupies even-numbered subcarriers, the quantity of subcarriers that can be occupied by the ZC sequence is 3168÷2=1584. In this case, the value of the length N of the ZC sequence for generating the first signal is a maximum prime number 1583 that is not greater than 1584.

(II) Respectively generate corresponding N-1 ZC sequences by using all integers from 1 to N-1 as root values.

(III) Respectively generate N-1 OFDM signals based on the N-1 ZC sequences, and respectively calculate PAPRs corresponding to the N-1 OFDM signals.

For a manner of generating the OFDM signals, refer to the related descriptions of the manner 1 in S401. Details are not described herein again.

(IV) Determine M1 smallest PAPRs from N-1 PAPRs, where M1 is an integer greater than 0 and less than N-1.

(V) Calculate chirp rates of OFDM signals corresponding to the M1 PAPRs, and determine K1 largest chirp rates from M1 chirp rates, where K1 is an integer greater than 0 and less than or equal to M1.

(VI) Determine K1 root values of K1 ZC sequences as the first set, where the K1 ZC sequences are used to generate OFDM signals corresponding to the K1 largest chirp rates in (V).

For example, determining the root values as the first set may be combining the K1 root values into the first set, in other words, elements included in the first set are the K1 root values.

In an optional embodiment, m is an integer greater than or equal to 3 and less than or equal to 15.

In an optional embodiment, the element in the third set includes 11, 12, 13, 14, 15, 16, 24, N-11, N-12, N-13, N-14, N-15, N-16, or N-24.

The following uses m=10 as an example to separately describe elements that may be included in the third set when a quantity of RBs occupied by the first signal is 264, 132, 66, or 32. In other words, values in the following Table 6 to Table 9 are all integers greater than 10 and less than N-10. It should be noted that the elements included in the third set shown below are determined based on the chirp rate and the PAPR.

In an example 1, the quantity of RBs occupied by the first signal is 264, N is 1583, and the elements included in the third set are shown in Table 6.

Table 6

| Root value u | | | | | | | | | |
|---|---|---|---|---|---|---|---|---|---|
| 12 | 1571 | 11 | 1572 | 14 | 1569 | 16 | 1567 | 13 | 1570 |
| 18 | 1565 | 22 | 1561 | 24 | 1559 | 17 | 1566 | 36 | 1547 |
| 23 | 1560 | 15 | 1568 | 20 | 1563 | 33 | 1550 | 48 | 1535 |
| 31 | 1552 | 30 | 1553 | 44 | 1539 | 19 | 1564 | 26 | 1557 |

First signals generated by the first device based on ZC sequences obtained based on any two root values in Table 6 that sum up to N have a same PAPR and a same range Doppler coupling degree. For example, when 12+1571=1583, first signals generated based on ZC sequences respectively obtained by using 12 and 1571 as root values have a same PAPR and a same range Doppler coupling degree. For another example, when 18+1565=1583, first signals generated based on ZC sequences respectively obtained by using 18 and 1565 as root values have a same PAPR and a same range Doppler coupling degree. A range of PAPRs of first signals generated based on ZC sequences obtained based on the root values shown in Table 6 is 2.792 dB to 3.115 dB.

For descriptions of the range Doppler coupling, refer to the related descriptions of Table 1. Details are not described herein again.

It should be understood that, when m is another value, the root value shown in Table 6 may change. In other words, the elements included in the third set may vary with a value of m. For example, when m is 11, 11 and 1572 in Table 6 may be replaced with 88 and 1495. For another example, when m is 12, 11, 1572, 12, and 1571 in Table 6 may be replaced with 88, 1495, 25, and 1558.

In an example 2, the quantity of RBs occupied by the first signal is 132, N is 787, and the elements included in the third set are shown in Table 7.

Table 7

| Root value u | | | | | | | | | |
|---|---|---|---|---|---|---|---|---|---|
| 11 | 776 | 24 | 763 | 28 | 759 | 15 | 772 | 14 | 773 |
| 13 | 774 | 16 | 771 | 27 | 760 | 12 | 775 | 29 | 758 |
| 22 | 765 | 34 | 753 | 21 | 766 | 23 | 764 | 30 | 757 |
| 18 | 769 | 26 | 761 | 20 | 767 | 44 | 743 | 36 | 751 |

First signals generated by the first device based on ZC sequences obtained based on any two root values in Table 7 that sum up to N have a same PAPR and a same range Doppler coupling degree. For example, when 11+776=787, first signals generated based on ZC sequences respectively obtained by using 11 and 787 as root values have a same PAPR and a same range Doppler coupling degree. For another example, when 13+774=787, first signals generated based on ZC sequences respectively obtained by using 13 and 774 as root values have a same PAPR and a same range Doppler coupling degree. A range of PAPRs of first signals generated based on ZC sequences obtained based on the root values shown in Table 7 is 3.137 dB to 3.383 dB.

For descriptions of the range Doppler coupling, refer to the related descriptions of Table 1. Details are not described herein again.

It should be understood that, when m is another value, the root value shown in Table 7 may change. In other words, the elements included in the third set may vary with a value of m. For example, when m=11, 11 and 776 in Table 7 may be replaced with 17 and 770. For another example, when m is 12, 11, 776, 12, and 775 in the table may be replaced with 17, 770, 25, and 762.

In an example 3, the quantity of RBs occupied by the first signal is 66, N=389, and the elements included in the third set are shown in Table 8.

Table 8

| Root value u | | | | | | | | | |
|---|---|---|---|---|---|---|---|---|---|
| 13 | 376 | 15 | 374 | 30 | 359 | 17 | 372 | 11 | 378 |
| 78 | 311 | 26 | 363 | 14 | 375 | 16 | 373 | 19 | 370 |
| 81 | 308 | 39 | 350 | 24 | 365 | 21 | 368 | 49 | 340 |
| 23 | 366 | 35 | 354 | 36 | 353 | 12 | 377 | 79 | 310 |

First signals generated by the first device based on ZC sequences obtained based on any two root values in Table 8 that sum up to N have a same PAPR and a same range Doppler coupling degree. For example, when 13+376=389, first signals generated based on ZC sequences respectively obtained by using 13 and 376 as root values have a same PAPR and a same range Doppler coupling degree. For another example, when 78+311=389, first signals generated based on ZC sequences respectively obtained by using 78 and 311 as root values have a same PAPR and a same range Doppler coupling degree. A range of PAPRs of first signals generated based on ZC sequences obtained based on the root values shown in Table 8 is 3.1103 dB to 3.5905 dB.

For descriptions of the range Doppler coupling, refer to the related descriptions of Table 1. Details are not described herein again.

It should be understood that, when m is another value, the root value shown in Table 8 may change. In other words, the elements included in the third set may vary with a value of m. For example, when m=11, 11 and 378 in Table 8 may be replaced with 77 and 312. For another example, when m=12, 11, 378, 12, and 377 in Table 8 may be replaced with 77, 312, 22, and 367.

In an example 4, the quantity of RBs occupied by the first signal is 32, N=191, and the elements included in the third set are shown in Table 9.

Table 9

| Root value u | | | | | | | | | |
|---|---|---|---|---|---|---|---|---|---|
| 12 | 179 | 24 | 167 | 19 | 172 | 16 | 175 | 15 | 176 |
| 38 | 153 | 17 | 174 | 39 | 152 | 27 | 164 | 11 | 180 |
| 14 | 177 | 37 | 154 | 42 | 149 | 21 | 170 | 32 | 159 |
| 13 | 178 | 20 | 171 | 48 | 143 | 25 | 166 | 41 | 150 |

First signals generated by the first device based on ZC sequences obtained based on any two root values in Table 9 that sum up to N have a same PAPR and a same range Doppler coupling degree. For example, when 12+179=191, first signals generated based on ZC sequences respectively obtained by using 12 and 179 as root values have a same PAPR and a same range Doppler coupling degree. For another example, when 38+153=191, first signals generated based on ZC sequences respectively obtained by using 38 and 153 as root values have a same PAPR and a same range Doppler coupling degree. A range of PAPRs of first signals generated based on ZC sequences obtained based on the root values shown in Table 9 is 3.2086 dB to 4.0700 dB.

For descriptions of the range Doppler coupling, refer to the related descriptions of Table 1. Details are not described herein again.

It should be understood that, when m is another value, the root value shown in Table 9 may change. In other words, the elements included in the third set may vary with a value of m. For example, when m is 11, 11 and 180 in the table may be replaced with 43 and 148. For another example, when m is 12, 11, 180, 12, and 179 in the table may be replaced with 43, 148, 18, and 173.

It should be further understood that the third set may include all or some of the elements shown in Table 6, Table 7, Table 8, or Table 9.

For example, the elements included in the third set in this embodiment of this application may be determined based on the following step I to step VI.

(I). Determine a length N of a ZC sequence.

For a process of determining the length N, refer to the foregoing related descriptions. Details are not described herein again.

(II). Respectively generate corresponding N-1 ZC sequences by using all integers from 1 to N-1 as root values.

(III). Generate N-1 OFDM signals based on the N-1 ZC sequences, and calculate PAPRs corresponding to the N-1 OFDM signals.

For a manner of generating the OFDM signals, refer to the related descriptions of the manner 2 in S401. Details are not described herein again.

(IV). Determine M2 smallest PAPRs from N-1 PAPRs, where M2 is an integer greater than 0 and less than N-1.

(V). Calculate chirp rates of OFDM signals corresponding to the M2 PAPRs, and determine K2 smallest chirp rates from M2 chirp rates, where K2 is an integer greater than 0 and less than or equal to M2.

(VI). Determine K2 root values of K2 ZC sequences as the third set, where the K2 ZC sequences are used to generate OFDM signals corresponding to the K2 largest chirp rates in (V).

For example, determining the root values as the third set may be combining the K2 root values into the third set, in other words, elements included in the third set are the K2 root values.

In an optional embodiment, the method 400 further includes: The first device sends first information to the second device, where the first information includes the root value and the length of the ZC sequence, and/or information about a time domain resource and/or a frequency domain resource occupied by the first signal. Correspondingly, the second device receives the first information.

Optionally, the second device receives the first information, and determines the first signal based on the first information.

It should be noted that, when the second device receives the echo signal of the first signal, the first device needs to perform the foregoing step of sending the first information to the second device. When the first device receives the echo signal of the first signal, the first device may not need to perform the foregoing step of sending the first information to the second device.

In an optional embodiment, the elements included in the first set are determined based on a chirp rate and/or a peak-to-average power ratio PAPR.

In an optional embodiment, a chirp rate of an OFDM signal obtained based on a ZC sequence generated based on any element in the first set is greater than a chirp rate of an OFDM signal obtained based on a ZC sequence generated based on any element in a second set.

In an optional embodiment, a PAPR of the OFDM signal obtained based on the ZC sequence generated based on any element in the first set is less than a PAPR of the OFDM signal obtained based on the ZC sequence generated based on any element in the second set.

In this embodiment of this application, a value of a multiplicative inverse of any element in the second set modulo N is an integer greater than 0 and less than or equal to n, or an integer greater than or equal to N-n and less than N.

In an optional embodiment, the elements included in the third set are determined based on a chirp rate and/or a PAPR.

In an optional embodiment, a chirp rate of an OFDM signal obtained based on a ZC sequence generated based on any element in the third set is greater than a chirp rate of an OFDM signal obtained based on a ZC sequence generated based on any element in a fourth set.

In this embodiment of this application, a value of any element in the fourth set is an integer greater than 0 and less than or equal to m, or an integer greater than or equal to N-m and less than N.

In an optional embodiment, a PAPR of the OFDM signal obtained based on the ZC sequence generated based on any element in the third set is less than a PAPR of the OFDM signal obtained based on the ZC sequence generated based on any element in the fourth set.

It should be understood that sequence numbers of the foregoing processes do not mean execution sequences. The execution sequences of the processes should be determined based on functions and internal logic of the processes, and should not constitute any limitation on the implementation processes of embodiments of this application.

The foregoing describes in detail the communication method in embodiments of this application with reference to FIG. 1 to FIG. 7. The following describes in detail communication apparatuses in embodiments of this application with reference to FIG. 8 and FIG. 9.

FIG. 8 shows a communication apparatus 800 according to an embodiment of this application. As shown in FIG. 8, the communication apparatus 800 includes a processing module 810 and a transceiver module 820.

In a possible implementation, the communication apparatus 800 is a first device or a chip of the first device.

For example, the processing module 810 is configured to generate a first signal based on a ZC sequence, where a root value of the ZC sequence is an element in a first set, a value of a multiplicative inverse of any element in the first set modulo N is an integer greater than n and less than N-n, N is an integer greater than n, N is a length of the ZC sequence, and n is an integer greater than 0 and less than N/2. The transceiver module is configured to send the first signal.

Optionally, n is an integer greater than or equal to 3 and less than or equal to 15.

Optionally, a quantity of RBs occupied by the first signal is 264, N is 1583, and elements in the first set include: 132, 144, 113, 487, 1484, 66, 1539, 88, 72, 838, 48, 766, 1170, 554, 1372, 33, 1035, 36, 18, 190, 1451, 1439, 1470, 1096, 99, 1517, 44, 1495, 1511, 745, 1535, 817, 413, 1029, 211, 1550, 548, 1547, 1565, or 1393.

Optionally, the quantity of RBs occupied by the first signal is 132, N is 787, and the elements in the first set include: 164, 644, 322, 105, 281, 246, 190, 534, 121, 459, 712, 308, 162, 204, 324, 341, 306, 454, 161, 118, 623, 143, 465, 682, 506, 541, 597, 253, 666, 328, 75, 479, 625, 583, 463, 446, 481, 333, 626, or 669.

Optionally, the quantity of RBs occupied by the first signal is 66, N=389, and the elements in the first set include: 30, 26, 13, 183, 106, 5, 250, 15, 41, 73, 10, 81, 127, 365, 37, 289, 54, 203, 64, 162, 359, 363, 376, 206, 283, 384, 139, 374, 348, 316, 379, 308, 262, 24, 352, 100, 335, 186, 325, or 227.

Optionally, the quantity of RBs occupied by the first signal is 32, N=191, and the elements in the first set include: 175, 8, 10, 140, 45, 186, 179, 49, 150, 44, 92, 91, 6, 139, 31, 50, 105, 53, 4, 84, 16, 183, 181, 51, 146, 5, 12, 142, 41, 147, 99, 100, 185, 52, 160, 141, 86, 138, 187, or 107.

Optionally, the transceiver module is further configured to receive an echo signal of the first signal.

Optionally, the transceiver module is further configured to send first information to a second device, where the first information includes the root value and the length of the ZC sequence, and/or information about a time domain resource and/or a frequency domain resource occupied by the first signal.

Optionally, the first signal is used for sensing, or the first signal is used for sensing and channel measurement, or the first signal is used for sensing and channel estimation, or the first signal is used for sensing and downlink data demodulation.

Optionally, the length of the ZC sequence is a prime number, the ZC sequence is mapped to N subcarriers, and the N subcarriers are distributed at equal intervals in frequency domain.

Optionally, the element included in the first set is determined based on a chirp rate and/or a PAPR.

Optionally, a chirp rate of an OFDM signal obtained based on a ZC sequence generated based on any element in the first set is greater than a chirp rate of an OFDM signal obtained based on a ZC sequence generated based on any element in a second set, and a value of a multiplicative inverse of any element in the second set modulo N is an integer greater than 0 and less than or equal to n, or an integer greater than or equal to N-n and less than N.

Optionally, a PAPR of the OFDM signal obtained based on the ZC sequence generated based on any element in the first set is less than a PAPR of the OFDM signal obtained based on the ZC sequence generated based on any element in the second set, and the value of the multiplicative inverse of any element in the second set modulo N is an integer greater than 0 and less than or equal to n, or an integer greater than or equal to N-n and less than N.

For example, the processing module 810 is configured to generate a first signal based on a ZC sequence, where a root value of the ZC sequence is an element in a first set, a value of any element in the first set is an integer greater than m and less than N-m, N is an integer greater than m, N is a length of the ZC sequence, and m is an integer greater than 0 and less than N/2. The transceiver module 820 is configured to send the first signal.

In an optional example, a person skilled in the art may understand that the communication apparatus 800 may be specifically the first device in the foregoing embodiment, and the communication apparatus 800 may be configured to perform the procedures and/or steps corresponding to the network device in the method 400. To avoid repetition, details are not described herein again.

In a possible implementation, the communication apparatus 800 is a second device or a chip of the second device.

For example, the transceiver module 820 is configured to receive an echo signal of a first signal, where the first signal is generated based on a ZC sequence, a root value of the ZC sequence is an element in a first set, a value of a multiplicative inverse of any element in the first set modulo N is an integer greater than n and less than N-n, N is an integer greater than n, N is a length of the ZC sequence, and n is an integer greater than 0 and less than N/2.

Optionally, n is an integer greater than or equal to 3 and less than or equal to 15.

Optionally, a quantity of RBs occupied by the first signal is 264, N is 1583, and elements in the first set include: 132, 144, 113, 487, 1484, 66, 1539, 88, 72, 838, 48, 766, 1170, 554, 1372, 33, 1035, 36, 18, 190, 1451, 1439, 1470, 1096, 99, 1517, 44, 1495, 1511, 745, 1535, 817, 413, 1029, 211, 1550, 548, 1547, 1565, or 1393.

Optionally, the quantity of RBs occupied by the first signal is 132, N is 787, and the elements in the first set include: 164, 644, 322, 105, 281, 246, 190, 534, 121, 459, 712, 308, 162, 204, 324, 341, 306, 454, 161, 118, 623, 143, 465, 682, 506, 541, 597, 253, 666, 328, 75, 479, 625, 583, 463, 446, 481, 333, 626, or 669.

Optionally, the quantity of RBs occupied by the first signal is 66, N=389, and the elements in the first set include: 30, 26, 13, 183, 106, 5, 250, 15, 41, 73, 10, 81, 127, 365, 37, 289, 54, 203, 64, 162, 359, 363, 376, 206, 283, 384, 139, 374, 348, 316, 379, 308, 262, 24, 352, 100, 335, 186, 325, or 227.

Optionally, the quantity of RBs occupied by the first signal is 32, N=191, and the elements in the first set include: 175, 8, 10, 140, 45, 186, 179, 49, 150, 44, 92, 91, 6, 139, 31, 50, 105, 53, 4, 84, 16, 183, 181, 51, 146, 5, 12, 142, 41, 147, 99, 100, 185, 52, 160, 141, 86, 138, 187, or 107.

Optionally, the transceiver module 820 is further configured to receive first information from a first device, where the first information includes the root value and the length of the ZC sequence, and/or information about a time domain resource and/or a frequency domain resource occupied by the first signal.

Optionally, the first signal is used for sensing, or the first signal is used for sensing and channel measurement, or the first signal is used for sensing and channel estimation, or the first signal is used for sensing and downlink data demodulation.

Optionally, the length of the ZC sequence is a prime number, the ZC sequence is mapped to N subcarriers, and the N subcarriers are distributed at equal intervals in frequency domain.

Optionally, the elements included in the first set are determined based on a chirp rate and/or a PAPR.

Optionally, a chirp rate of an OFDM signal obtained based on a ZC sequence generated based on any element in the first set is greater than a chirp rate of an OFDM signal obtained based on a ZC sequence generated based on any element in a second set, and a value of a multiplicative inverse of any element in the second set modulo N is an integer greater than 0 and less than or equal to n, or an integer greater than or equal to N-n and less than N.

Optionally, a PAPR of the OFDM signal obtained based on the ZC sequence generated based on any element in the first set is less than a PAPR of the OFDM signal obtained based on the ZC sequence generated based on any element in the second set, and the value of the multiplicative inverse of any element in the second set modulo N is an integer greater than 0 and less than or equal to n, or an integer greater than or equal to N-n and less than N.

For example, the transceiver module 820 is configured to receive an echo signal of a first signal, where the first signal is generated based on a ZC sequence, a root value of the ZC sequence is an element in a first set, a value of any element in the first set is an integer greater than m and less than N-m, N is an integer greater than m, N is a length of the ZC sequence, and m is an integer greater than 0 and less than N/2.

In an optional example, a person skilled in the art may understand that the communication apparatus 800 may be specifically the second device in the foregoing embodiment, and the communication apparatus 800 may be configured to perform the procedures and/or steps corresponding to the second device in the method 400. To avoid repetition, details are not described herein again.

It should be understood that the communication apparatus 800 herein is implemented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another suitable component that supports the described functions. In an optional example, a person skilled in the art may understand that the communication apparatus 800 may be specifically the first device or the second device in the foregoing embodiment, or functions of the first device or the second device in the foregoing embodiment may be integrated into the communication apparatus 800, and the communication apparatus 800 may be configured to perform the procedures and/or steps corresponding to the first device or the second device in the foregoing method embodiments. To avoid repetition, details are not described herein again.

The communication apparatus 800 has a function of implementing corresponding steps performed by the first device or the second device in the foregoing method. The foregoing function may be implemented by hardware, or may be implemented by hardware executing corresponding software. The hardware or the software includes one or more modules corresponding to the function. For example, the transceiver module 810 may be a communication interface, for example, a transceiver interface.

FIG. 9 shows another communication apparatus 900 according to an embodiment of this application. The communication apparatus 900 includes a processor 910. Optionally, the apparatus 900 further includes a memory 920 and a transceiver 930. The processor 910, the memory 920, and the transceiver 930 are connected through an internal connection path. The memory 920 is configured to store instructions. The processor 910 is configured to execute the instructions stored in the memory 920, to enable the communication apparatus 900 to perform the method provided in the foregoing method embodiments.

It should be understood that the functions of the communication apparatus 800 in the foregoing embodiment may be integrated into the communication apparatus 900, and the communication apparatus 900 may be configured to perform the steps and/or procedures corresponding to the first device in the foregoing method embodiments; or the communication apparatus 900 may be configured to perform the steps and/or procedures corresponding to the second device in the foregoing method embodiments. Optionally, the memory 920 may include a read-only memory and a random access memory, and provide instructions and data for the processor. A part of the memory may further include a non-volatile random access memory. For example, the memory may further store information about a device type. The processor 910 may be configured to execute the instructions stored in the memory. When the processor executes the instructions, the processor 910 may perform the steps and/or procedures corresponding to the first device in the foregoing method embodiments, or the processor 910 may perform the steps and/or procedures corresponding to the second device in the foregoing method embodiments.

It should be understood that, in this embodiment of this application, the processor 910 may be a central processing unit (central processing unit, CPU) or a baseband processor. Alternatively, the processor 910 may be another general-purpose processor, a digital signal processor (digital signal processor, DSP), an ASIC, a field programmable gate array (field programmable gate array, FPGA), another programmable logic device, a discrete gate or a transistor logic device, a discrete hardware component, or the like. The processor 910 may be a microprocessor, or the processor 910 may be any conventional processor or the like.

In an implementation process, the steps in the method 400 may be implemented by using a hardware integrated logical circuit in the processor or by using instructions in a form of software. The steps of the methods disclosed with reference to embodiments of this application may be directly performed and completed by using a hardware processor, or may be performed and completed by using a combination of a hardware module and a software module in the processor. The software module may be located in a mature storage medium in the art, for example, a random access memory, a flash memory, a read-only memory, a programmable read-only memory, an electrically erasable programmable memory, or a register. The storage medium is located in the memory, and the processor executes instructions in the memory and completes the steps in the foregoing methods in combination with hardware of the processor. To avoid repetition, details are not described herein again.

This application further provides a computer-readable medium, where the computer-readable medium stores a computer program. When the computer program is executed by a computer, the method according to any one of the foregoing method embodiments is implemented.

This application further provides a computer program product including instructions. When the computer program product is executed by a computer, the method according to any one of the foregoing method embodiments is implemented.

A person of ordinary skill in the art may be aware that, the units and algorithm steps described with reference to the examples in embodiments disclosed in this specification can be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed systems, apparatuses, and methods may be implemented in another manner. For example, the apparatus embodiments described above are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The foregoing units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some steps of the methods according to embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1.  A signal transmission method, applied to a first device, wherein the method comprises:

    generating a first signal based on a Zadoff-Chu ZC sequence, wherein a root value of the ZC sequence is an element in a first set, a multiplicative inverse of any element in the first set modulo N is an integer greater than n and less than N-n, N is an integer greater than n, N is a length of the ZC sequence, and n is an integer greater than 0 and less than N/2; and

sending the first signal.

2. The method according to claim 1, wherein n is an integer greater than or equal to 3 and less than or equal to 15.

3. The method according to claim 2, wherein a quantity of resource blocks RBs occupied by the first signal is 264, N is 1583, and elements in the first set comprise: 132, 144, 113, 487, 1484, 66, 1539, 88, 72, 838, 48, 766, 1170, 554, 1372, 33, 1035, 36, 18, 190, 1451, 1439, 1470, 1096, 99, 1517, 44, 1495, 1511, 745, 1535, 817, 413, 1029, 211, 1550, 548, 1547, 1565, or 1393.

4. The method according to claim 2, wherein a quantity of RBs occupied by the first signal is 132, N is 787, and elements in the first set comprise: 164, 644, 322, 105, 281, 246, 190, 534, 121, 459, 712, 308, 162, 204, 324, 341, 306, 454, 161, 118, 623, 143, 465, 682, 506, 541, 597, 253, 666, 328, 75, 479, 625, 583, 463, 446, 481, 333, 626, or 669.

5. The method according to claim 2, wherein a quantity of RBs occupied by the first signal is 66, N is 389, and elements in the first set comprise: 30, 26, 13, 183, 106, 5, 250, 15, 41, 73, 10, 81, 127, 365, 37, 289, 54, 203, 64, 162, 359, 363, 376, 206, 283, 384, 139, 374, 348, 316, 379, 308, 262, 24, 352, 100, 335, 186, 325, or 227.

6. The method according to claim 2, wherein a quantity of RBs occupied by the first signal is 32, N is 191, and elements in the first set comprise: 175, 8, 10, 140, 45, 186, 179, 49, 150, 44, 92, 91, 6, 139, 31, 50, 105, 53, 4, 84, 16, 183, 181, 51, 146, 5, 12, 142, 41, 147, 99, 100, 185, 52, 160, 141, 86, 138, 187, or 107.

7. The method according to any one of claims 1 to 6, wherein the method further comprises:
receiving an echo signal of the first signal.

8. The method according to any one of claims 1 to 6, wherein the method further comprises:
sending first information to a second device, wherein the first information comprises the root value and the length of the ZC sequence, and/or information about a time domain resource and/or a frequency domain resource occupied by the first signal.

9. The method according to any one of claims 1 to 8, wherein the first signal is used for sensing, or the first signal is used for sensing and channel measurement, or the first signal is used for sensing and channel estimation, or the first signal is used for sensing and downlink data demodulation.

10. The method according to any one of claims 1 to 9, wherein the length of the ZC sequence is a prime number, the ZC sequence is mapped to N subcarriers, and the N subcarriers are distributed at equal intervals in frequency domain.

11. The method according to any one of claims 1 to 10, wherein the elements comprised in the first set are determined based on a chirp rate and/or a peak-to-average power ratio PAPR.

12. The method according to claim 11, wherein a chirp rate of an orthogonal frequency division multiplexing OFDM signal obtained based on a ZC sequence generated based on any element in the first set is greater than a chirp rate of an OFDM signal obtained based on a ZC sequence generated based on any element in a second set, and a multiplicative inverse of any element in the second set modulo N is an integer greater than 0 and less than or equal to n, or an integer greater than or equal to N-n and less than N.

13. The method according to claim 11 or 12, wherein a PAPR of the OFDM signal obtained based on the ZC sequence generated based on any element in the first set is less than a PAPR of the OFDM signal obtained based on the ZC sequence generated based on any element in the second set, and the multiplicative inverse of any element in the second set modulo N is an integer greater than 0 and less than or equal to n, or an integer greater than or equal to N-n and less than N.

14. A signal transmission method, applied to a second device, wherein the method comprises:
receiving an echo signal of a first signal, wherein the first signal is generated based on a ZC sequence, a root value of the ZC sequence is an element in a first set, a multiplicative inverse of any element in the first set modulo N is an integer greater than n and less than N-n, N is an integer greater than n, N is a length of the ZC sequence, and n is an integer greater than 0 and less than N/2.

15. The method according to claim 14, wherein n is an integer greater than or equal to 3 and less than or equal to 15.

16. The method according to claim 15, wherein a quantity of resource blocks RBs occupied by the first signal is 264, N is 1583, and elements in the first set comprise: 132, 144, 113, 487, 1484, 66, 1539, 88, 72, 838, 48, 766, 1170, 554, 1372, 33, 1035, 36, 18, 190, 1451, 1439, 1470, 1096, 99, 1517, 44, 1495, 1511, 745, 1535, 817, 413, 1029, 211, 1550, 548, 1547, 1565, or 1393.

17. The method according to claim 15, wherein a quantity of RBs occupied by the first signal is 132, N is 787, and elements in the first set comprise: 164, 644, 322, 105, 281, 246, 190, 534, 121, 459, 712, 308, 162, 204, 324, 341, 306, 454, 161, 118, 623, 143, 465, 682, 506, 541, 597, 253, 666, 328, 75, 479, 625, 583, 463, 446, 481, 333, 626, or 669.

18. The method according to claim 15, wherein a quantity of RBs occupied by the first signal is 66, N is 389, and elements in the first set comprise: 30, 26, 13, 183, 106, 5, 250, 15, 41, 73, 10, 81, 127, 365, 37, 289, 54, 203, 64, 162, 359, 363, 376, 206, 283, 384, 139, 374, 348, 316, 379, 308, 262, 24, 352, 100, 335, 186, 325, or 227.

19. The method according to claim 15, wherein a quantity of RBs occupied by the first signal is 32, N is 191, and elements in the first set comprise: 175, 8, 10, 140, 45, 186, 179, 49, 150, 44, 92, 91, 6, 139, 31, 50, 105, 53, 4, 84, 16, 183, 181, 51, 146, 5, 12, 142, 41, 147, 99, 100, 185, 52, 160, 141, 86, 138, 187, or 107.

20. The method according to any one of claims 14 to 19, wherein the method further comprises: receiving first information from a first device, wherein the first information comprises the root value and the length of the ZC sequence, and/or information about a time domain resource and/or a frequency domain resource occupied by the first signal.

21. The method according to any one of claims 14 to 20, wherein the first signal is used for sensing, or the first signal is used for sensing and channel measurement, or the first signal is used for sensing and channel estimation, or the first signal is used for sensing and downlink data demodulation.

22. The method according to any one of claims 14 to 21, wherein the length of the ZC sequence is a prime number, the ZC sequence is mapped to N subcarriers, and the N subcarriers are distributed at equal intervals in frequency domain.

23. The method according to any one of claims 14 to 22, wherein the element comprised in the first set is determined based on a chirp rate and/or a peak-to-average power ratio PAPR.

24. The method according to claim 23, wherein a chirp rate of an orthogonal frequency division multiplexing OFDM signal obtained based on a ZC sequence generated based on any element in the first set is greater than a chirp rate of an OFDM signal obtained based on a ZC sequence generated based on any element in a second set, and a multiplicative inverse of any element in the second set modulo N is an integer greater than 0 and less than or equal to n, or an integer greater than or equal to N-n and less than N.

25. The method according to claim 23 or 24, wherein a PAPR of the OFDM signal obtained based on the ZC sequence generated based on any element in the first set is less than a PAPR of the OFDM signal obtained based on the ZC sequence generated based on any element in the second set, and the multiplicative inverse of any element in the second set modulo N is an integer greater than 0 and less than or equal to n, or an integer greater than or equal to N-n and less than N.

26. A communication apparatus, comprising a module configured to implement the method according to any one of claims 1 to 13, or comprising a module configured to implement the method according to any one of claims 14 to 25.

27. A communication apparatus, comprising a processor, wherein the processor is configured to execute a computer program stored in a memory, to enable the communication apparatus to implement the method according to any one of claims 1 to 13, or implement the method according to any one of claims 14 to 25.

28. The apparatus according to claim 27, wherein the communication apparatus further comprises the memory, and the memory is configured to store the computer program.

29. A computer-readable storage medium, wherein the computer-readable storage medium stores a computer program, and when the computer program is executed by a processor, the method according to any one of claims 1 to 13 is implemented, or the method according to any one of claims 14 to 25 is implemented.

30. A communication system, comprising a first device and a second device, wherein the first device is configured to implement the method according to any one of claims 1 to 13, and the second device is configured to perform the method according to any one of claims 14 to 25.

100

FIG. 1

200

FIG. 2

FIG. 3

FIG. 4

ZC sequence → Serial-to-parallel conversion → ... → Subcarrier mapping → ... → IFFT → ... → Parallel-to-serial conversion → OFDM signal → Add a cyclic prefix → PFFE including a PA → First signal

FIG. 5

ZC sequence → Serial-to-parallel conversion ... FFT ... Subcarrier mapping ... IFFT ... Parallel-to-serial conversion → OFDM signal → Add a cyclic prefix → PFFE including a PA → First signal

FIG. 6

EP 4 645 785 A1

FIG. 7

FIG. 8

FIG. 9

## INTERNATIONAL SEARCH REPORT

| International application No. |
|---|
| **PCT/CN2024/072769** |

### A. CLASSIFICATION OF SUBJECT MATTER

H04L27/26(2006.01)i

According to International Patent Classification (IPC) or to both national classification and IPC

### B. FIELDS SEARCHED

Minimum documentation searched (classification system followed by classification symbols)

IPC:H04L,H04W,H04B

Documentation searched other than minimum documentation to the extent that such documents are included in the fields searched

Electronic data base consulted during the international search (name of data base and, where practicable, search terms used)

3GPP, CNTXT, ENTXT, DWPI, IEEE, CNKI: 表, 集合, 根, 逆元, 序列, inverse, modular, zadoff, zc, z-c, sequence, root, set, table

### C. DOCUMENTS CONSIDERED TO BE RELEVANT

| Category* | Citation of document, with indication, where appropriate, of the relevant passages | Relevant to claim No. |
|---|---|---|
| A | US 2021068169 A1 (QUALCOMM INC.) 04 March 2021 (2021-03-04) description, paragraphs [010]-[0122] | 1-30 |
| A | CN 115208420 A (GUANGDONG OPPO MOBILE COMMUNICATIONS CO., LTD.) 18 October 2022 (2022-10-18) entire document | 1-30 |
| A | CN 103124438 A (HUAWEI TECHNOLOGIES CO., LTD.) 29 May 2013 (2013-05-29) entire document | 1-30 |
| A | US 2012287874 A1 (NEC CORP.) 15 November 2012 (2012-11-15) entire document | 1-30 |
| A | QUALCOMM INC. "Evaluations of 2-Rooted PRACH Preamble" *3GPP TSG RAN WG1 #98bis, R1-1911113,* 20 October 2019 (2019-10-20), entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 March 2024** | **20 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

EP 4 645 785 A1

**INTERNATIONAL SEARCH REPORT**
Information on patent family members

International application No.

**PCT/CN2024/072769**

| Patent document cited in search report | | | Publication date (day/month/year) | Patent family member(s) | | | Publication date (day/month/year) |
|---|---|---|---|---|---|---|---|
| US | 2021068169 | A1 | 04 March 2021 | WO | 2021041648 | A1 | 04 March 2021 |
| CN | 115208420 | A | 18 October 2022 | None | | | |
| CN | 103124438 | A | 29 May 2013 | None | | | |
| US | 2012287874 | A1 | 15 November 2012 | JPWO | 2011059068 | A1 | 04 April 2013 |
| | | | | EP | 2501064 | A1 | 19 September 2012 |
| | | | | WO | 2011059068 | A1 | 19 May 2011 |
| | | | | KR | 20120085891 | A | 01 August 2012 |
| | | | | CN | 102763356 | A | 31 October 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310145236